# FASCICULE DE BREVET EUROPEEN

(11) **EP 2 737 234 B1**
(45) Date de publication et mention de la délivrance du brevet: **16.12.2015**
(21) Numéro de dépôt: 12738577.1
(22) Date de dépôt: 06.07.2012
(51) Int. Cl.: F16K 1/30

(54) **RACCORD DE REMPLISSAGE, RÉCIPIENT, PROCÉDÉ DE REMPLISSAGE ET PRISE DE CONDITIONNEMENT**
FÜLLANSCHLUSS, BEHÄLTER, FÜLLVERFAHREN UND FÜLLDÜSE
FILLING CONNECTOR, CONTAINER, FILLING METHOD AND FILLING NOZZLE

(30) Priorité: 26.07.2011 FR 1156785
(43) Date de publication de la demande: 04.06.2014
(73) Titulaire: L'Air Liquide Société Anonyme pour l'Etude et l'Exploitation des Procédés Georges Claude, 75007 Paris (FR)
(72) Inventeur: FRENAL, Antoine, F-95460 Ezanville (FR); MANSCOURT, Cyril, 92170 Vanves (FR); PISOT, Philippe, F-38140 Apprieu (FR)
(74) Mandataire: De Cuenca, Emmanuel Jaime
(86) Numéro de dépôt international: PCT/FR2012/051597
(87) Numéro de publication internationale: WO 2013/014355

(56) Documents cités:
- EP-A1- 0 393 234
- DE-U1-202006 014 061
- FR-A- 1 543 482
- GB-A- 1 019 524
- US-A- 5 482 083
- US-A1- 2010 308 060

## Description

La présente invention concerne un raccord de remplissage, un robinet, un récipient de fluide sous pression, un procédé et une prise de remplissage utilisant un tel raccord.

L'invention concerne plus particulièrement un raccord de remplissage pour récipient de fluide sous pression destiné à coopérer avec une prise de conditionnement pour permettre le remplissage dudit récipient, le raccord comprenant un corps définissant un circuit interne de remplissage entre une extrémité amont destinée à être reliée à une prise de conditionnement et une extrémité aval destinée à être reliée à un récipient, le raccord comprenant un clapet d'isolement mobile relativement à un siège entre une position amont de fermeture du circuit et une position aval d'ouverture du circuit, ledit clapet d'isolement étant sollicité vers sa position amont par un organe de rappel, le raccord comprenant en outre un clapet pare-poussière disposé en amont du clapet d'isolement, ledit clapet pare-poussière comportant une extrémité aval et étant mobile relativement au corps entre une position amont de fermeture de l'extrémité amont du circuit et une position aval d'ouverture de l'extrémité amont circuit, ledit clapet pare-poussière étant sollicité vers sa position amont par au moins un organe de rappel.

La présente invention concerne en particulier un raccord de remplissage comprenant en série, d'amont en aval, un clapet pare-poussière et un clapet d'isolement (les termes « amont » et « aval » se réfèrent au sens de circulation du gaz lors d'un remplissage).

Le clapet pare-poussière est prévu notamment pour former une barrière en amont du clapet d'isolation pour empêcher ou limiter l'intrusion de particules ou de poussières pouvant altérer l'étanchéité dudit clapet d'isolement.

Généralement les raccords de remplissage comportent un bouchon pare-poussière qui s'escamote au contact de l'extrémité de la prise de conditionnement pour permettre à la prise de remplissage de s'enfoncer dans le raccord de remplissage pour actionner le clapet d'isolation situé en aval dans le raccord de remplissage. Ceci constitue généralement une bonne protection contre l'intrusion de corps étrangers dans un raccord de remplissage. Cependant, cette protection n'est généralement pas suffisante car, lorsque le clapet pare-poussière est ouvert, la prise de remplissage qui pénètre dans le raccord de remplissage en aval du clapet pare-poussière peut apporter des particules.

Une pollution du clapet d'isolation peut engendrer un taux de fuite important au cours de la durée de vie du produit sur lequel est monté ce raccord de remplissage. Ceci s'explique par le fait que la zone d'étanchéité du clapet d'isolation polluée (poussière, particules,...) perd une grande partie de son étanchéité. Ce risque d'intrusion de particules est accru lorsque le raccord de remplissage est vertical (remplissage par le haut).

Une solution connue consiste à prévoir un filtre pour particules solides dans le raccord, en amont du clapet d'isolation. Ceci permet de retenir des particules ou poussières en amont du clapet d'isolation mais ne permet pas d'actionner l'ouverture du clapet d'isolation par contact mécanique (le filtre formant en effet une barrière mécanique pour un pousse-clapet).

Une autre solution consiste à prévoir un filtre en aval du clapet d'isolation. Ceci permet l'actionnement mécanique du clapet d'isolation et protège des poussières l'aval du clapet d'isolation (l'intérieur du robinet et l'intérieur du récipient). Cependant, l'extrémité amont du clapet d'isolation est alors sujette aux pollutions par des particules ou poussières pouvant affecter son étanchéité.

La gestion de l'étanchéité vis-à-vis de l'extérieur entre la prise de remplissage (c'est-à-dire un outil de remplissage) et le raccord de remplissage est également problématique. Généralement, la prise de remplissage comprend des joints qui coopèrent avec le raccord de remplissage. Ces joints sont fortement sollicités lors des opérations de remplissage successives. Ceci nécessite des changements fréquents des joints d'étanchéité.

Le document WO2009101350 décrit un dispositif de remplissage et de distribution de gaz d'un réservoir de gaz sous pression comprenant un conduit de soutirage muni d'un détendeur et deux clapets disposés en série et actionnables par un système utilisateur pour le soutirage de gaz. Pour remplir le réservoir, une dérivation est réalisée sur une partie du conduit de soutirage formant un canal de remplissage court-circuitant l'un des deux clapets et le détendeur du conduit de soutirage.

Le document EP0393234 décrit un raccord de soutirage de bouteille de gaz liquéfié destiné à coopérer avec un détendeur amovible. Le raccord comprend de l'extérieur vers l'intérieur, un premier clapet étanche et un second clapet anti-retour.

Un but de la présente invention est de pallier tout ou partie des inconvénients de l'art antérieur relevés ci-dessus.

A cette fin, le raccord selon l'invention, par ailleurs conforme à la définition générique qu'en donne le préambule ci-dessus, est essentiellement caractérisé en ce que le clapet pare-poussière est déplaçable sélectivement vers l'aval soit :
- dans une première position aval déterminée dite « sans contact » ouvrant l'extrémité amont du circuit, dans laquelle l'extrémité aval du clapet pare-poussière ne pousse pas l'extrémité amont du clapet d'isolement, l'extrémité amont du clapet d'isolement étant susceptible d'être poussée vers sa position aval d'ouverture du circuit par du fluide sous pression entrant par l'extrémité amont ouverte du circuit, soit dans
- une seconde position aval déterminée dite « de contact » ouvrant l'extrémité amont du circuit, dans laquelle l'extrémité aval du clapet pare-poussière vient pousser une extrémité amont du clapet d'isolement mobile pour déplacer par contact le clapet d'isolement vers sa position aval d'ouverture du circuit, le clapet pare-poussière comportant un ou des passages pour guider au moins une partie du flux de fluide transitant d'amont en aval à travers le corps dudit clapet pare-poussière, le clapet pare-poussière comprenant une première et une seconde pièces concentriques susceptibles d'être déplacées l'une relativement à l'autre selon la direction amont-aval.

Un tel agencement permet d'améliorer la fiabilité et la sécurité du système de remplissage. En effet, le clapet pare-poussière guide et force le flux de gaz entrant lors du remplissage lors de son transit vers l'aval. Les conduits de passage traversant le clapet pare-poussière peuvent permettre notamment de diminuer les turbulences du gaz lors du remplissage. De cette façon, les vibrations générées sont également réduites. Une convergence du ou des flux traversant le clapet pare-poussière peut permettre d'accélérer le flux de gaz et de le concentrer vers une zone centrale du passage, notamment au niveau de l'ouverture du siège (partie amont du clapet d'isolation aval).

Cette configuration permet d'épargner au moins en partie le ressort du clapet du flux de gaz de remplissage. Ce guidage du gaz de remplissage peut permettre également de diriger le flux de gaz vers la zone formant le siège pour le clapet d'isolation aval, favorisant son nettoyage à chaque remplissage. Ceci permet de réduire les risques de fuites dues à un siège de clapet d'isolation souillé.

Un tel agencement du clapet pare-poussière en deux pièces concentriques permet également d'améliorer la sécurité de l'étanchéité lors du remplissage. En effet, le clapet pare-poussière en deux pièces distinctes relativement mobiles vers l'aval permet de réaliser une étanchéité statique entre la pince de remplissage et l'entrée du raccord et de prévoir en même temps un actionnement dynamique distinct du clapet d'isolation. Le clapet d'isolation est poussé sélectivement vers l'aval (vers sa position d'ouverture) de préférence par une partie mobile du pare-poussière). Cette pièce du clapet pare-poussière qui actionne (pousse) la clapet d'isolation n'assure pas d'étanchéité mais est sous atmosphère étanche grâce à une autre partie statique de la prise de conditionnement. C'est-à-dire que la pièce mobile qui ouvre le clapet d'isolation ne sollicite pas de joint d'étanchéité en dynamique, le joint d'étanchéité de la prise de conditionnement reste statique. Ceci protège le joint des usures et autres sollicitations dynamiques.

La configuration permet ainsi d'améliorer significativement la sécurité de la bouteille lors de ses remplissages multiples.

Cette architecture permet également de protéger le clapet d'isolement lors des opérations de remplissage successives.

De cette façon, en position fermée le clapet pare-poussière amont protège le clapet d'isolement aval des poussières mais protège également le clapet d'isolement aval du contact direct avec l'extrémité d'une prise de remplissage.

De plus, cette architecture à double clapets mobiles en série coulissant selon un même axe forme un mécanisme de protection efficace dans un processus de remplissage permettant une protection améliorée du clapet d'isolation aval.

L'agencement des deux clapets en série permet de coopérer efficacement avec une prise de conditionnement déterminée.

En particulier, le clapet pare-poussière coulissant peut permettre l'ouverture de l'amont du raccord tout
- en protégeant des particules le clapet d'isolation aval et
- en permettant l'actionnement de ce clapet d'isolation aval par contact mécanique.

L'agencement du clapet pare-poussière amont et du clapet d'isolation aval coopère également aisément avec des prises de conditionnement assurant l'ouverture du clapet d'isolation aval via un flux de gaz sous pression délivré dans le raccord (au lieu d'un contact mécanique).

De plus, le clapet pare-poussière régule le flux de gaz entrant lors d'un remplissage car le gaz est forcé à traverser le corps du clapet pare-poussière. Ceci régule avantageusement le flux de gaz vers la partie aval en minimisant les turbulences néfastes pour la mécanique du clapet d'isolation.

L'agencement du raccord à double clapets en série garantit ainsi une protection élevée du clapet d'isolation contre des salissures et offre des séquences d'ouvertures qui s'adaptent à différents types de remplissages.

L'invention offre une grande sécurité dans les séquences d'ouverture/fermeture du raccord de remplissage. De plus, le remplissage selon l'invention préserve l'étanchéité du raccord durant la durée de vie du raccord.

Ainsi, par exemple, et sans que ce soit limitatif, le clapet amont pare-poussière peut avantageusement participer à l'ouverture mécanique du clapet d'isolation aval n transmettant un effort d'ouverture d'amont en aval. C'est-à-dire que, dans certaines configurations de remplissage, le clapet pare-poussière peut former un organe de transmission de mouvement entre une prise de conditionnement et le clapet d'isolation aval.

De même, le clapet pare-poussière mobile peut assurer une ouverture de l'amont du raccord permettant l'ouverture du clapet d'isolation aval avec la pression du gaz de remplissage (en fonction des pressions et tarage des clapets).

Le clapet amont pare-poussière peut ainsi assurer les fonctions suivantes :
- l'ouverture/fermeture de l'amont du circuit,
- guidage du flux de fluide en amont du clapet d'isolation lors d'un processus de remplissage, et, éventuellement,
- la transmission de mouvement mécanique pour commander sélectivement l'ouverture ou la fermeture du clapet aval d'isolation,

De plus, cette architecture de clapet pare-poussière en deux parties permet, au niveau de la prise de remplissage, de découpler (séparer) les fonctions d'une part d'étanchéité entre le raccord et la prise, et, d'autre part, d'actionnement mécanique du clapet d'isolation.

Selon des particularités possibles :
- le corps du clapet pare-poussière coulisse dans le circuit, le ou les passages contraignant la totalité ou la quasi-totalité du flux de fluide transitant d'amont en aval dans le circuit à passer à travers le corps dudit clapet pare-poussière, quelle que soit la position aval du clapet pare-poussière,
- le raccord comprend un premier organe de rappel sollicitant la première pièce concentrique vers l'amont pour obturer l'extrémité amont du circuit, le premier organe de rappel comprenant une première extrémité prenant appui sur une partie fixe du raccord et une seconde extrémité prenant appui sur ladite première pièce concentrique, lé raccord comprenant second organe de rappel sollicitant la seconde pièce concentrique vers l'amont pour obturer l'extrémité amont du circuit, le second organe de rappel comprenant une première extrémité prenant appui sur la première pièce concentrique et une seconde extrémité prenant appui sur ladite seconde pièce concentrique,
- la première pièce concentrique comprend un ou plusieurs passages pour guider au moins une partie du flux de fluide transitant d'amont en aval à travers le corps dudit clapet pare-poussière,
- la seconde pièce concentrique est montée coulissante dans un passage interne central de la première pièce concentrique,
- le clapet d'isolement est déplaçable sélectivement dans une position aval d'ouverture du circuit par actionnement mécanique réalisé par le clapet pare-poussière,
- le clapet d'isolement est déplaçable sélectivement dans une position aval d'ouverture du circuit par un flux de fluide sous pression,
- le clapet pare-poussière est sélectivement déplaçable vers l'aval par un actionnement mécanique et/ou par du fluide sous pression,
- lorsque le clapet pare-poussière est en position amont de fermeture de l'extrémité amont du circuit, les extrémités amont respectives des première et seconde pièces concentriques obturent chacune une partie de l'extrémité amont du circuit,
- le clapet pare-poussière comprend un organe de rappel sollicitant la seconde pièce concentrique vers l'amont pour obturer l'extrémité amont du circuit,
- lorsque la seconde pièce concentrique est déplacée vers l'aval relativement à la première pièce concentrique, cette seconde pièce concentrique ouvre un passage interne supplémentaire pour guider au moins une partie du flux de fluide transitant d'amont en aval à travers le corps dudit clapet pare-poussière,
- le ou les passages comportent au moins une portion convergente pour guider au moins une partie du gaz transitant à travers le clapet pare-poussière vers la partie centrale du circuit interne de remplissage,
- le ou les passages convergent et guident au moins une partie du gaz transitant à travers le clapet pare-poussière de façon parallèle dans la partie centrale du circuit interne de remplissage,
- le ou les passages convergent pour guider au moins une partie du gaz transitant à travers le clapet pare-poussière vers la partie centrale de l'extrémité amont du clapet d'isolement,
- le ou les passages convergent pour guider au moins une partie du gaz transitant à travers le clapet pare-poussière vers une zone convergente du circuit interne de remplissage définissant le siège du clapet d'isolement,
- la surface extérieure et/ou interne du corps du raccord comprend des empreintes formant des creux et/ou des reliefs d'attache destinés à coopérer avec des formes conjuguées d'une prise de conditionnement pour former un système d'attache mécanique sélectif, notamment à connexion rapide,
- le clapet pare-poussière comporte une extrémité amont actionnable mécaniquement et/ou via du fluide sous pression,
- le clapet d'isolement mobile comporte une garniture d'étanchéité souple destiné à coopérer avec le siège pour réaliser la fermeture étanche du circuit lorsque le clapet est sollicité contre le siège avec une pression déterminée,
- en position amont de fermeture de l'extrémité amont du circuit, ledit clapet pare-poussière obture de façon étanche l'orifice d'entrée de l'extrémité amont circuit, par exemple de façon étanche à l'eau,
- en position amont de fermeture de l'extrémité amont du circuit, ledit clapet pare-poussière obture de façon non étanche l'orifice d'entrée de l'extrémité amont circuit,
- le corps du raccord et/ou le clapet pare-poussière comporte une lèvre souple formant une barrière d'étanchéité à l'eau entre le corps du raccord et lé clapet pare-poussière au moins lorsque ce dernier est en position amont de fermeture,
- la lèvre souple comporte une extrémité libre autorisant le passage de gaz ou de liquide lorsqu'un différentiel de pression déterminé existe de part et d'autre de la lèvre, pour permettre notamment une éventuelle évacuation de gaz de l'aval vers l'amont, par exemple en cas de fuite du clapet d'isolement,
- en position amont du clapet pare-poussière, l'extrémité amont du clapet pare-poussière referme l'extrémité amont du circuit de façon affleurant à l'extrémité amont du corps du raccord,
- le corps du clapet pare-poussière coulisse de façon étanche ou non étanche dans le circuit,
- l'étanchéité entre le clapet pare-poussière et le corps du raccord est réalisée par contact métal/métal et/ou via au moins un joint,
- le ou les passages comprennent un ou des conduits internes traversant le corps du clapet pare-poussière et/ou traversant le corps du raccord,
- le ou les passages comprennent au moins un espacement entre le clapet pare-poussière et le corps du raccord, pour contraindre la totalité ou la quasi-totalité du flux de fluide transitant d'amont en aval dans le circuit à passer à travers le clapet pare-poussière,
- chaque organe de rappel comprend au moins l'un parmi : un ressort de compression un ressort de traction,
- l'extrémité aval du clapet pare-poussière comprend une tige pour actionner mécaniquement l'extrémité amont du clapet d'isolement,
- l'extrémité amont du clapet d'isolement comprend une surface destinée à coopérer en contact mécanique avec l'extrémité aval du clapet pare-poussière,
- la fermeture du clapet d'isolement est réalisée avant la fermeture du clapet pare-poussière,
- le siège du clapet d'isolement est formé par un épaulement d'un cadre tubulaire solidaire du corps du raccord, le clapet d'isolement coulissant dans ce cadre, l'extrémité aval du clapet pare-poussière entrant dans ledit cadre lorsque le clapet pare-poussière vient en position aval,
- le raccord comporte une butée destinée à coopérer avec le clapet pare-poussière pour limiter la position aval maximale de ce dernier,
- la butée destinée à coopérer avec le clapet pare-poussière pour limiter la position aval maximale de ce dernier est solidaire du corps du raccord et/ou d'un cadre solidaire du corps et définissant le siège du clapet d'isolement,
- le clapet d'isolement comprend un mécanisme anti-retour (« NRV ») générant un effort sur le clapet d'isolement le sollicitant vers l'amont lorsque ce dernier est soumis à une pression fluidique dans sa partie amont,
- le mécanisme anti-retour comprend un canal reliant l'extrémité amont du clapet d'isolement à une chambre aval, pour transformer une pression fluidique sur la partie amont du clapet en un effort sur l'extrémité aval du clapet d'isolement tendant à déplacer ledit clapet d'isolement en position amont de fermeture,
- le mécanisme anti-retour (« NRV ») comporte un rapport de surfaces déterminé entre d'une part l'extrémité amont du clapet d'isolement soumise à un fluide amont et, d'autre part, l'extrémité aval du clapet d'isolement communiquant avec la chambre, pour solliciter ledit clapet d'isolement en position amont de fermeture lorsque son extrémité amont est soumise à du fluide sous pression,
- le clapet pare-poussière comprend un filtre pour filtrer des particules solides transitant au travers dudit clapet, par exemple au moins une partie des passages pour le fluide traversant le corps du clapet pare-poussière comporte au moins un filtre ou une grille de filtration de particules solides.

L'invention concerne également un robinet pour fluide sous pression, en particulier pour gaz sous pression, avec ou sans détendeur de pression, comprenant un raccord de remplissage destiné à coopérer avec une prise de conditionnement pour permettre le remplissage dudit récipient via ledit raccord, le raccord de remplissage étant conforme à l'une quelconque des caractéristiques ci-dessus ou ci-dessous.

L'invention concerne également un récipient de fluide sous pression, en particulier bouteille de gaz sous pression, comprenant un robinet conforme à l'une quelconque des caractéristiques ci-dessus ou ci-après.

L'invention concerne également un procédé de remplissage d'un tel récipient de gaz sous pression au- moyen d'une prise de conditionnement connectée mécaniquement et de façon amovible audit raccord de remplissage du récipient, le procédé comportant une première étape de déplacement du clapet pare-poussière vers l'aval pour ouvrir l'extrémité amont du circuit via un actionnement mécanique et/ou via un actionnement fluidique réalisé par la prise de conditionnement et une seconde étape de déplacement du clapet d'isolement vers une position aval d'ouverture via un actionnement mécanique réalisé par le clapet pare-poussière et/ou via un actionnement fluidique réalisé par le gaz délivré par la prise de conditionnement, lors du remplissage au moins une partie du gaz transitant d'amont en aval est guidé dans le ou les passages du clapet pare-poussière, à travers le corps dudit clapet pare-poussière.

Selon d'autres particularités possibles,
- la première étape, le clapet pare-poussière est déplacé dans sa première position aval déterminée dite « sans contact » et en ce que, dans la seconde étape, le clapet d'isolement est déplacé vers une position aval d'ouverture via un actionnement fluidique réalisé par le gaz délivré par la prise de conditionnement,
- lors de la première étape, le clapet pare-poussière est déplacé dans sa seconde position aval déterminée dite « de contact » dans la seconde étape le clapet d'isolement est déplacé vers une position aval d'ouverture via un actionnement mécanique réalisé par le clapet pare-poussière,
- le clapet pare-poussière est déplacé vers l'aval par une action mécanique d'une extrémité d'un pousse-clapet appartenant à la prise de conditionnement,
- la seconde pièce concentrique est déplacée dans une position plus en aval que la première pièce concentrique pour actionner mécaniquement le clapet d'isolement vers une position aval d'ouverture,
- la prise de conditionnement comprend un pousse-clapet destiné à être introduit de façon étanche dans l'orifice de l'extrémité amont du corps du raccord pour repousser le clapet pare-poussière vers l'aval, le pousse-clapet comprenant un manchon extérieur et une poussoir central monté coulissant dans le manchon extérieur pour actionner sélectivement vers l'aval la seconde pièce concentrique par rapport à la première pièce concentrique,
- en fin de processus de remplissage d'un récipient de gaz sous pression, le clapet d'isolement est refermé automatiquement lorsque l'effort mécanique et/ou fluidique exercé sur la partie amont du clapet devient inférieur à un seuil déterminé,
- le procédé de remplissage comporte une première étape de déplacement du clapet pare-poussière vers une position aval d'ouverture de l'extrémité amont du circuit via un actionnement mécanique et/ou un actionnement fluidique réalisé par la prise de conditionnement et une seconde étape de déplacement du clapet d'isolement vers une position aval d'ouverture via un actionnement mécanique réalisé par le clapet pare-poussière,
- l'ouverture du ou des clapets peut être réalisée indépendamment de l'attache mécanique de la prise de conditionnement sur le raccord, en particulier, l'ouverture du ou des clapets peut être réalisée par la prise de conditionnement après l'attache mécanique de la prise de conditionnement sur le raccord et via un actionnement distinct du système d'attache,

L'invention concerne également une prise de conditionnement destinée à assurer le remplissage d'un tel récipient, la prise comprenant des organes d'accrochage mécanique sélectif de la prise sur une surface extérieure d'un raccord, un pousse-clapet mobilé en translation destiné à être introduit dans l'orifice d'un raccord pour repousser un clapet pare-poussière, le pousse-clapet comprenant un manchon extérieur et une poussoir central monté coulissant dans le manchon extérieur pour actionner sélectivement vers l'aval la seconde pièce concentrique par rapport à la première pièce concentrique, le manchon extérieur comprenant un organe d'étanchéité pour assurer une étanchéité statique pendant que le poussoir central est sélectivement déplacé.

Selon d'autres particularités possibles :
- la prise de conditionnement prévue pour coopérer avec un raccord de remplissage d'un robinet de récipient de fluide sous pression comprend au moins une griffe s'étendant selon une direction longitudinale autour d'un axe longitudinal, l'espace central situé entre la ou les griffes et l'axe longitudinal formant un logement destiné à accueillir un raccord de remplissage de forme générale cylindrique, la face interne de la au moins une griffe située en vis-à-vis de l'espace central comprenant des reliefs et/ou des creux de dimensions déterminées, les reliefs et/ou creux étant espacés relativement les uns des autres de façon déterminée pour s'emboîter dans des rainures et/ou reliefs conjugués formés sur la face extérieure d'un raccord de remplissage, la au moins une griffe étant mobile transversalement par rapport à l'axe longitudinal entre une position dite « écartée » pour permettre l'introduction d'un raccord dans l'espace central et une position dite « rapprochée » pour permettre l'emboîtement de la face interne des griffes sur la face extérieure d'un raccord,
- ladite prise comprend un organe de verrouillage mobile entre une position active bloquant les griffes en position rapprochée et une position inactive autorisant le déplacement des griffes vers la position écartée,
- le manchon extérieur comprend au moins un organe d'étanchéité tel qu'un joint torique pour assurer une étanchéité vis-à-vis de l'extérieur entre la prise de conditionnement et le circuit interne du raccord,
- l'organe d'étanchéité du manchon extérieur coopère en étanchéité avec une surface interne cylindrique du corps du raccord,
- le fluide fourni par la prise de conditionnement circule à l'intérieur du manchon extérieur, via un volume situé entre le manchon extérieur et le poussoir central et/ou via un passage interne transitant à l'intérieur du poussoir central,
- l'ensemble manchon extérieur et un poussoir central est sélectivement mobile en translation relativement aux organes d'accrochage de la prise de conditionnement prévus pour l'accrochage de la prise sur un raccord.

L'invention peut concerner également tout dispositif ou procédé alternatif comprenant toute combinaison des caractéristiques ci-dessus ou ci-dessus

D'autres particularités et avantages apparaîtront à la lecture de la description ci-après, faite en référence aux figures dans lesquelles :
- la figure 1 représente une vue en coupe, schématique et partielle, illustrant un premier exemple de réalisation d'un raccord de remplissage selon l'invention dans une position fermée et monté sur un robinet de récipient,
- la figure 2 représente une vue en perspective et en coupe, schématique et partielle illustrant le raccord de remplissage de la figure 1, dans une position raccordée à d'une prise de conditionnement, le clapet d'isolation du raccord étant fermé,
- la figure 3 représente une vue en perspective et en coupe, schématique et partielle, illustrant le raccord de remplissage de la figure 1, dans une position raccordée à d'une prise de conditionnement, le clapet d'isolation du raccord étant ouvert,
- la figure 4 représente une vue en coupe, schématique et partielle, illustrant la structure d'un raccord de remplissage selon l'invention dans une position fermée (deux clapets fermés),
- la figure 5 représente le raccord de remplissage de la figure 4 dans une position ouverte (deux clapets ouverts par contact mécanique)
- la figure 6 représente le raccord de remplissage de la figure 4 dans une position ouverte (deux clapets ouverts respectivement par pression de gaz et par contact mécanique),
- la figure 7 représente le raccord de remplissage de la figure 4 dans une position ouverte (deux clapets ouverts respectivement par contact mécanique et par pression de gaz),
- la figure 8 représente le raccord de remplissage de la figure 4 dans une position ouverte (deux clapets ouverts par pression de gaz),
- la figure 9 représente le raccord de remplissage de la figure 3 dans une position fermée de test (clapet amont ouvert et clapet aval fermé).

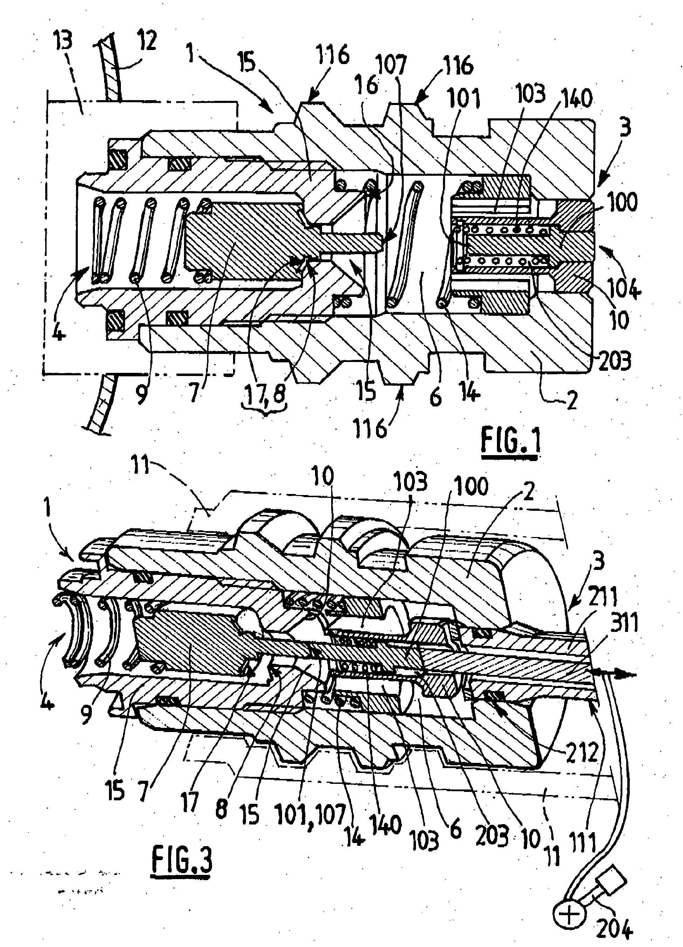

En se référant à présent à la figure 1, le raccord 1 de remplissage comprend un corps 2, par exemple de forme générale cylindrique. Le corps 2 définit un circuit 6 interne de remplissage entre une extrémité amont 3 destinée à être reliée à une prise de conditionnement et une extrémité aval 4 destinée à être reliée avec un récipient de gaz sous pression (via par exemple un circuit interne d'un robinet).

Dans l'exemple de la figure 1, l'extrémité aval du corps du raccord 1 est fixée à un robinet 13, par exemple par vissage. Le robinet 13 (schématisé en pointillés) est fixé au niveau de l'orifice d'un réservoir 12 telle qu'une bouteille de fluide sous pression.

L'extrémité amont 3 du circuit 6 (et du raccord 1) est sélectivement refermable par un clapet 10, 100 pare-poussière mobile dans le corps 2 du raccord.

Le clapet 10, 100 pare-poussière est sélectivement mobile dans le corps 2 (de préférence en translation) entre une position amont de fermeture de l'extrémité amont 3 du circuit 6 et une position aval d'ouverture de l'extrémité amont 3 circuit. De préférence, le clapet 10, 100 pare-poussière est sollicité vers sa position amont par au moins un organe 14 de rappel, par exemple un ressort tel qu'un ressort de compression.

De préférence, en position amont de fermeture de l'extrémité amont 3 du circuit 6, le clapet 10, 100 pare-poussière est logé dans le corps 2 du raccord et affleure sur la surface extrême du corps 2 du raccord 1.

Le clapet 10, 100 pare-poussière ferme l'entrée amont 3 du circuit de façon étanche ou non étanche par contact avec le corps 2 du raccord 1. Le corps du clapet pare-poussière 10, 100 peut comporter une ou plusieurs joints obturant de façon étanche le circuit 6.

Selon une particularité avantageuse, le clapet 10, 100 pare-poussière comprend une première 10 et une seconde 100 pièces concentriques susceptibles d'être déplacées l'une relativement à l'autre selon la direction amont-aval.

Par exemple, un premier organe de rappel 14 tel qu'un ressort sollicite la première 10 pièce concentrique vers l'amont pour obturer l'extrémité amont 3 du circuit. Ce premier organe de rappel 14 comprend de préférence une première extrémité prenant appui sur une partie fixe du raccord et une seconde extrémité prenant appui sur ladite première pièce concentrique 10. La première 10 pièce concentrique comprend un ou plusieurs passages 103 pour guider au moins une partie du flux de fluide transitant d'amont 3 en aval 4 à travers le corps dudit clapet 10, 100 pare-poussière lorsque ce dernier est ouvert.

La position amont extrême de la première 10 pièce concentrique peut être définie par une butée entre cette première 10 pièce concentrique et le corps 2 de raccord.

Le raccord comprend un second organe de rappel 140 sollicitant la seconde 100 pièce concentrique vers l'amont pour obturer l'extrémité amont 3 du circuit. Le second organe de rappel 140, par exemple un ressort, comprenant une première extrémité prenant appui sur la première pièce concentrique 10 et une seconde extrémité prenant appui sur ladite seconde pièce concentrique 100. C'est-à-dire que la seconde pièce concentrique 100 est montée mobile sur la première pièce concentrique 10.

De préférence, la seconde 100 pièce concentrique a la forme d'un axe qui est montée coulissante dans un passage 203 interne central de la première 10 pièce concentrique.

Lorsque le clapet 10, 100 pare-poussière est en position amont de fermeture de l'extrémité amont 3 du circuit 6, les extrémités amont respectives des première 10 et seconde 100 pièces concentriques obturent chacune une partie de l'extrémité amont 3 du circuit 6. De préférence, les extrémités amont des première 10 et seconde 100 pièces concentriques affleurent dans le même plan que l'extrémité amont plane du raccord.

De préférence, les première 10 et seconde 100 pièces concentriques ont des formes conjuguées qui assurent par butée une position amont maximale de la seconde 100 pièce concentriques par rapport à la première 10.

De préférence également, lorsque la seconde 100 pièce concentrique est déplacée vers l'aval relativement à la première 10 pièce concentrique, cette seconde 100 pièce concentrique ouvre un passage interne 203 supplémentaire pour guider au moins une partie du flux de fluide transitant d'amont 3 en aval 4 à travers le corps dudit clapet 10 pare-poussière.

Le ou les passages 103, 203 peuvent le cas échéant comporter au moins une portion convergente pour guider au moins une partie du gaz transitant à travers le clapet 10, 100 pare-poussière vers la partie centrale du circuit interne de remplissage.

Le ou les passages 103, 203 peuvent comporter des portions parallèles dans la partie centrale du circuit interne de remplissage.

Ces passages internes guident au moins une partie du gaz transitant à travers le clapet 10, 100 pare-poussière vers la partie centrale de l'extrémité amont 107 du clapet 7 d'isolement.

C'est-à-dire que, lorsqu'un gaz transite d'amont 3 en aval 4, le ou les passages 103 contraignent la totalité ou la quasi-totalité du flux de gaz à passer à travers le corps du clapet 10,100 pare-poussière quelle que soit la position aval du clapet 10, 100 pare-poussière. Les passages 103 peuvent comprendre des conduits internes traversant le corps du clapet 10. En variante ou en combinaison, il est possible d'envisager des conduits ou passages traversant le corps 2 du raccord 1. De même, en variante ou en combinaison, il est possible d'envisager un ou des passages 103 formés par un espacement entre te clapet 10 pare-poussière et le corps 2 du raccord. En variante ou en combinaison lorsque le clapet 10 poussière ouvre l'extrémité amont 3 du circuit 6, le gaz sous pression transite vers l'aval en contournant le clapet 10, 100 pare-poussière (c'est-à-dire que le gaz passe entre le clapet 10 pare poussière et le corps 2 du raccord).

En aval du clapet 10, 100 pare-poussière, le circuit 6 contient un clapet 7 d'isolement mobile relativement à un siège 8. Le clapet 7 d'isolement est mobile de préférence en translation entre une position amont de fermeture du circuit et une position aval d'ouverture du circuit. Le clapet 7 d'isolement est sollicité par défaut vers sa position amont par un organe 9 de rappel tel qu'un ressort notamment un ressort de compression.

Comme représenté, le clapet 7 d'isolement peut comporter une garniture 17 d'étanchéité souple destiné à coopérer avec le siège. 8. La garniture souple peut comprendre du plastique, un polymère, un élastomère vulcanisée ou tout autre matériau approprié.

Comme représenté, sans que ce soit nécessaire, le, siège 8 du clapet 7 d'isolement peut être formé par un épaulement annulaire solidaire d'un cadre 15 tubulaire fixé dans le corps 2 du raccord (par exemple par vissage étanche).

Par exemple, le clapet 7 d'isolement coulisse dans ce cadre 15. Une extrémité 16 de ce cadre 15 ou du siège 8 peut par exemple former une butée 16 destinée à coopérer avec le clapet 10 pare-poussière pour limiter la position aval maximale de ce dernier. De même, le ressort 14 de la première pièce 10 concentrique peut prendre appui sur ce cadre 15.

Ainsi, le clapet 10 pare-poussière comporte une extrémité ou surface amont 104 actionnable mécaniquement (c'est-à-dire par contact mécanique) et/ou via du fluide sous pression.

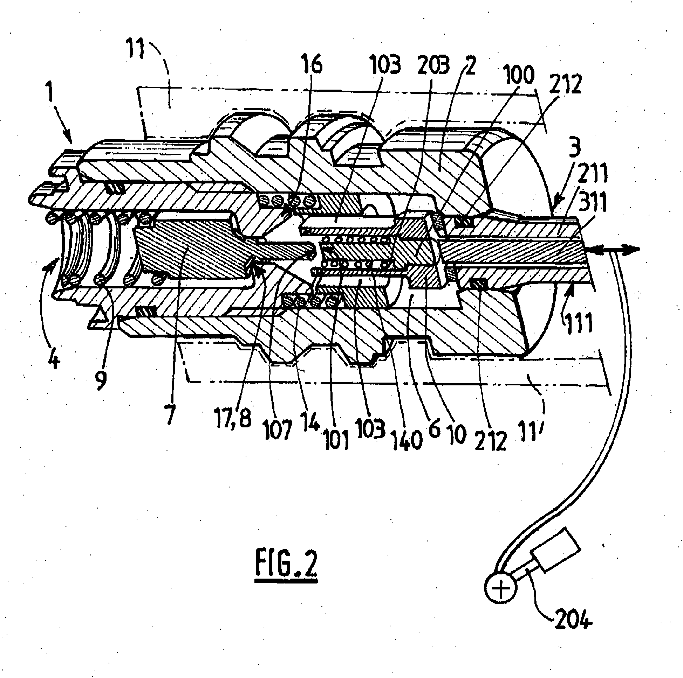

Aux figures 2 et 3 une prise de conditionnement 11 ouvrant le raccord 1 est représentée symboliquement (en pointillés pour sa partie extérieure et en traits pleins pour sa partie interne).

De préférence, la surface extérieure du corps 2 du raccord 1 comprend des empreintes 116 formant des creux et/ou des reliefs d'attache destinés à coopérer avec des formes conjuguées d'une prise 11 de conditionnement pour former un système d'attache mécanique, notamment à connexion rapide (non représenté en détail). En particulier, de préférence, les empreintes 116 sont dimensionnées et positionnées selon une géométrie déterminée, pour de préférence s'adapter à une prise de conditionnement 11 conjuguée déterminée (et uniquement à celle-ci).

Comme représenté à la figure 3, le clapet 10 pare-poussière est sélectivement déplaçable vers l'aval par un actionnement mécanique, par exemple par un pousse-clapet 111 sélectivement mobile en réponse à un actuateur tel qu'un levier 24 pivotant par exemple. Le déplacement du pousse-clapet 111 peut être obtenu également de façon automatique, par exemple par voie pneumatique ou et/ou va un système électromécanique.

Le pousse-clapet 111 vient de préférence s'introduire dans le raccord de façon étanche et délivre du gaz sous pression via un canal interne ou externe au pousse-clapet 111.

Dans une forme de réalisation possible représentée aux figures 2 et 3, le pousse-clapet (111) comprend un manchon extérieur 211 tubulaire et un poussoir 311 central monté coulissant dans le manchon extérieur 211.

Le poussoir 311 central est prévu pour actionner sélectivement vers l'aval la seconde pièce concentrique 100 par rapport à la première pièce 10 concentrique.

De préférence, le manchon extérieur 211 a un diamètre qui correspond au diamètre de l'ouverture de l'extrémité amont 3 du raccord. De plus, le manchon extérieur comprend un organe 212 d'étanchéité, tel qu'un joint torique qui vient assurer l'étanchéité statique entre le raccord et la prise 11 vis-à-vis de l'extérieur. L'organe d'étanchéité 212 du manchon extérieur 211 coopère en étanchéité avec une surface interne de forme cylindrique du corps 2 du raccord.

Ainsi, dans une première phase, lorsque la prise est raccordée au raccord 1, le manchon extérieur 211 tubulaire et le poussoir 311 central peuvent repousser les deux pièces concentriques 10, 100 du clapet pare-poussière. Le manchon extérieur 211 assure l'étanchéité de liaison.

Le cas échéant, l'ensemble manchon 211 extérieur et poussoir 311 central est sélectivement mobile en translation relativement aux organes d'accrochage prévus pour l'accrochage de la prise sur le raccord.

Dans une seconde phase, le poussoir 311 central peut être déplacé sélectivement vers l'aval relativement au manchon 211 extérieur pour actionner sélectivement vers l'aval la seconde pièce 100 concentrique par rapport à la première pièce 10 concentrique (cf. figure 3). Durant cette seconde phase, l'étanchéité assurée par le manchon extérieur 211 tubulaire reste statique.

De cette façon, en déplaçant la seconde pièce concentrique 100 vers l'aval, il est possible d'actionner mécaniquement l'extrémité amont 107 du clapet d'isolation pour le déplacer ce dernier et ouvrir le raccord.

Le fluide (gaz par exemple) fourni par la prise de conditionnement 11 peut circuler par exemple à l'intérieur du manchon extérieur 211, via un volume situé entre le manchon extérieur 211 et le poussor 311 central. En variante ou en combinaison, le fluide peu circuler via un passage interne (non représenté) ménagé à l'intérieur du poussoir 311 central,

Comme visible à la figure 3, lorsque la seconde pièce concentrique 100 du clapet pare-poussière est amenée dans une position aval déterminée dite « de contact » (avec l'extrémité amont 3 ouverte), une extrémité 101 aval de la seconde 100 pièce concentrique vient pousser une extrémité amont 107 du clapet 7 d'isolement pour déplacer le clapet 7 d'isolement vers sa position aval d'ouverture du circuit 6.

C'est-à-dire que le clapet 7 d'isolement est déplaçable sélectivement dans une position aval d'ouverture du circuit par actionnement mécanique réalisé par le clapet 10, 100 pare-poussière.

A cet effet, comme représenté aux figures, la seconde pièce concentrique, 100 du clapet 10 pare-poussière peut comporter une extrémité 101 aval en forme de tige dont la surface terminale est prévue pour actionner mécaniquement l'extrémité amont du clapet 7 d'isolement. L'extrémité amont du clapet 7 d'isolement peut également être formée par une tige qui vient faire saillie vers l'amont par rapport au siège 8 de forme générale annulaire.

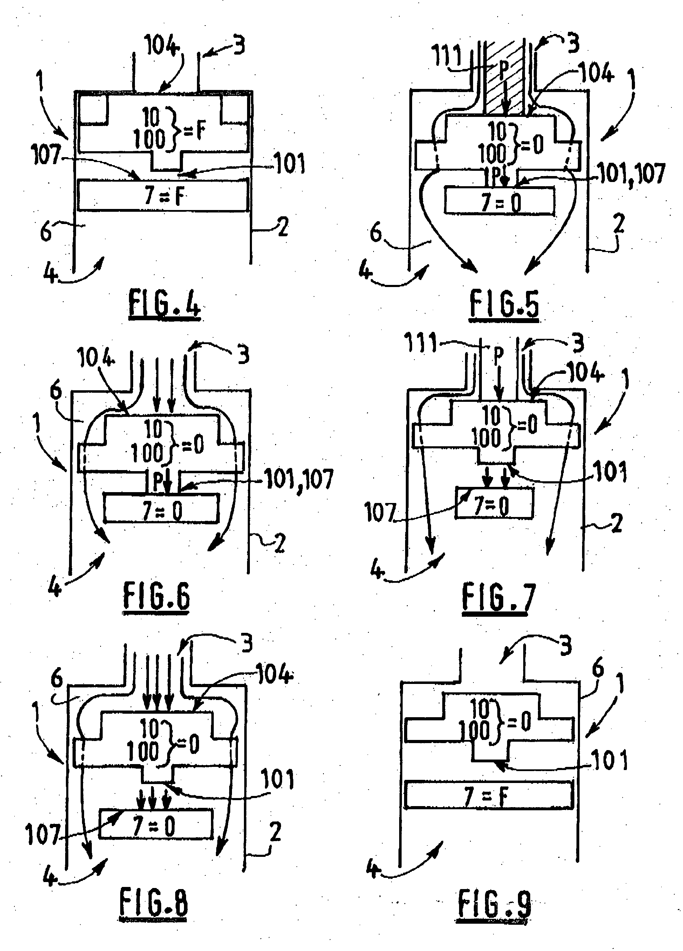

Ainsi, à partir d'une position fermée (clapet 10, 100 pare-poussière fermé F et clapet d'isolement fermé F) illustrée schématiquement à la figure 4, une prise 11 de conditionnement peut pousser mécaniquement l'extrémité amont 104 du clapet 10, 100 pare-poussière (pression P). Le clapet 10, 100 pare-poussière est déplacé vers l'aval. L'entrée du circuit 6 du raccord 2 est ouverte (figure 5). L'extrémité aval 101 du clapet 10, 100 pare-poussière vient à son tour pousser l'extrémité amont 107 du clapet 7 d'isolation (pression mécanique P) qui ouvre alors l'extrémité aval du circuit 6. Le flux de gaz sous pression peut transiter d'amont en aval (symbolisé par les flèches).

Bien entendu, ce mode d'ouverture et de remplissage n'est pas limité à cet exemple. Ainsi, comme représenté à la figure 6, selon les conditions de remplissage, l'extrémité amont 104 du clapet pare-poussière 10, 100 peut être poussée vers l'aval par le flux de gaz lui-même (symbolisé par des flèches). L'extrémité aval 101 du clapet 10, 100 pare-poussière peut ensuite pousser mécaniquement (pression P) le clapet 7 d'isolement.

Dans la variante de la figure 7, le clapet pare-poussière 10, 100 est ouvert (O) mécaniquement par une prise de conditionnement 11 (pression P) mais le clapet 7 d'isolement est ouvert (O) non pas par l'extrémité aval 101 du clapet 10, 100 pare-poussière mais par l'effort exercé par la pression du gaz entrant.

Dans la variante de la figure 8, le clapet pare-poussière 10, 100 et le clapet 7 d'isolement sont ouverts (O) par l'effort exercé par la pression du gaz de remplissage.

Ainsi, on comprend aisément que, selon la géométrie de la prise de remplissage et les conditions de remplissage (notamment le débit et la pression du gaz de remplissage introduit dans le raccord par la prise de remplissage 11), les deux clapets 10, 100 ; 7 en série peuvent être ouverts (déplacés vers l'aval) par un contact mécanique et/ou par la pression du gaz de remplissage.

Ceci confère une grande souplesse d'utilisation au raccord selon l'invention. En effet, le remplissage de gaz assure dans tous les cas une protection du clapet 7 d'isolation.

En outre, l'ouverture du raccord lors d'un remplissage peut être obtenue par une ouverture séquentielle des deux clapets 10,100 ;7 en série (d'abord le clapet 10, 100 pare-poussière puis le clapet 7 d'isolation).

En fin de processus dé remplissage d'un récipient de gaz sous pression, le clapet 7 d'isolement est refermé automatiquement par l'action du ressort 9 lorsque l'effort mécanique et/ou fluidique exercé sur la partie amont le clapet 7 devient inférieur à un seuil déterminé. Lors de la fin de l'opération de remplissage le clapet 7 d'isolement vient se refermer en principe avant que ne se referme le clapet 10, 100 pare-poussière.

La structure selon l'invention permet en outre de mettre en place des procédures de remplissage particulièrement efficaces en terme de sécurité pour les opérateurs assurant le remplissage et pour les utilisateurs finaux du robinet équipé d'un tel raccord.

Ainsi, par exemple, le clapet 10, 100 pare-poussière mobile adopte, au cours de son déplacement, aux moins deux positions d'étanchéité permettant de sécuriser le remplissage.

Dans une première position d'étanchéité, le clapet 10, 100 pare-poussière est déplacé vers l'aval et ouvre l'amont du circuit 6 sans que le clapet 7 d'isolement ne soit ouvert (cf. figure 9). Dans cette position d'ouverture (0) du clapet 10, 100 amont et de fermeture (F) du clapet 7 aval, la chambre située en amont du clapet 7 d'isolement peut être mise sous vide (pression basse déterminée) par exemple par un outil de remplissage pour réaliser des tests préalables au remplissage. Dans cette configuration il est en effet possible de mesurer d'éventuelles fuites provenant du clapet 7 d'isolation.

Dans une autre position d'étanchéité le clapet 7 d'isolement peut être également ouvert pour assurer un remplissage et/ou pour réaliser une éventuelle purge du circuit 6 et de la bouteille avant le remplissage (cf. par exemple la configuration de la figure 5 mais avec un flux de gaz inversé en cas de purge).

En fin de remplissage, le clapet d'isolement 7 peut être refermé et le clapet 10, 100 pare-poussière peut être maintenu ouvert (cf. figure 9) pour réaliser d'éventuels tests d'étanchéité de fin de remplissage comme ceux décrits ci-dessus préalablement au remplissage.

Ces modes de remplissage permettent de garantir la sécurité du remplissage et la tenue de l'étanchéité du raccord après de multiples remplissages.

L'utilisation de ce raccord sur des robinets de gaz de préférence munis de détendeurs de pression offre de nombreux avantages. En effet, les récipients (bouteilles par exemple) de gaz munis de tels robinets peuvent être remplis en toute sécurité et peuvent conserver un même raccord de remplissage sans pour autant mettre en péril l'étanchéité du raccord.

Le procédé de remplissage selon l'invention permet ainsi d'améliorer la protection de la garniture du clapet d'étanchéité de la pollution (particules métalliques, poussières...) via le clapet pare-poussière mobile déplacé lors du remplissage.

Ceci permet d'augmenter la fiabilité de l'étanchéité du raccord au cours de la durée de vie du robinet et de la bouteille qui en est équipée.

Selon l'invention, la poussée mécanique du clapet 7 d'isolation reste possible mais uniquement via le clapet 10, 100 pare poussière.

Le procédé de remplissage selon l'invention permet ainsi d'améliorer la sécurité du remplissage via l'actionnement du mécanisme à deux clapets en série décrit ci-dessus.

L'invention s'applique avantageusement aux raccords de remplissage et systèmes de remplissage pour bouteilles de gaz sous pression par exemple entre 150 et 750 bar) équipées de robinets avec des détendeurs intégrés ou à détendeurs amovibles.

Le raccord de remplissage peut le cas échéant également être le raccord de soutirage du gaz.

## Revendications

1. Raccord de remplissage pour récipient de fluide sous pression destiné à coopérer avec une prise de conditionnement pour permettre le remplissage dudit récipient, le raccord (1) comprenant un corps (2) définissant un circuit (6) interne de remplissage entre une extrémité amont (3) destinée à être reliée à une prise de conditionnement et une extrémité aval (4) destinée à être reliée à un récipient, le raccord comprenant un clapet (7) d'isolement mobile relativement à un siège (8) entre une position amont de fermeture du circuit et une position aval d'ouverture du circuit, ledit clapet (7) d'isolement étant sollicité vers sa position amont par un organe (9) de rappel, le raccord (1) comprenant en outre un clapet (10, 100) pare-poussière disposé en amont du clapet (7) d'isolement, ledit clapet (10, 100) pare-poussière comportant une extrémité (101) aval et étant mobile relativement au corps (2) entre une position amont de fermeture de l'extrémité amont (3) du circuit (6) et une position aval d'ouverture de l'extrémité amont (3) circuit, ledit clapet (10, 100) pare-poussière étant sollicité vers sa position amont par au moins un organe (14, 140) de rappel, **caractérisé en ce que** le clapet (10, 100) pare-poussière est déplaçable sélectivement vers l'aval soit :
- dans une première position aval déterminée dite « sans contact » ouvrant l'extrémité (3) amont du circuit (6), dans laquelle l'extrémité (101) aval du clapet (10, 100) pare-poussière ne pousse pas l'extrémité amont (107) du clapet (7) d'isolement, l'extrémité amont (107) du clapet (7) d'isolement étant susceptible d'être poussée vers sa position aval d'ouverture du circuit (6) par du fluide sous pression entrant par l'extrémité amont (3) ouverte du circuit (6), soit dans
- une seconde position aval déterminée dite « de contact » ouvrant l'extrémité amont (3) du circuit (6), dans laquelle l'extrémité (101) aval du clapet (10, 100) pare-poussière vient pousser une extrémité amont (107) du clapet (7) d'isolement mobile pour déplacer par contact le clapet (7) d'isolement vers sa position aval d'ouverture du circuit (6) et **en ce que** le clapet (10, 100) pare-poussière comporte un ou des passages (103) pour guider au moins une partie du flux de fluide transitant d'amont (3) en aval (4) à travers le corps dudit clapet (10) pare-poussière,
et **en ce que** le clapet (10, 100) pare-poussière comprend une première (10) et une seconde (100) pièces concentriques susceptibles d'être déplacées l'un relativement à l'autre selon la direction amont-aval.

2. Raccord selon la revendication 1, **caractérisé en ce qu'**il comprend un premier organe de rappel (14) colicitant la première (10) pièce concentrique vers l'amont pour obturer l'extrémité amant (3) du circuit, le premier organe de rappel (14) comprenant une première extrémité prenant appui sur une partie fixe du raccord et une seconde extrémité prenant appui sur ladite première pièce concentrique (10), le raccord comprenant second organe de rappel (140) sollicitant la seconde (100) pièce concentrique vers l'amont pour obturer l'extrémité amont (3) du circuit, le second organe de rappel (140) comprenant une première extrémité prenant appui sur la première pièce concentrique (10) et une seconde extrémité prenant appui sur ladite seconde pièce concentrique (100).

3. Raccord selon l'une quelconque des revendications 1 ou 2, **caractérisé en ce que** la première (10) pièce concentrique comprend un ou plusieurs passages (103) pour guider au moins une partie du flux de fluide transitant d'amont (3) en aval (4) à travers le corps dudit clapet (10, 100) pare-poussière.

4. Raccord selon l'une quelconque des revendications 1 à 3, **caractérisé en ce que** la seconde (100) pièce concentrique est montée coulissante dans un passage (203) interne central de la première (10) pièce concentrique.

5. Raccord selon l'une quelconque des revendications 1 à 4, **caractérisé en ce que** le clapet (7) d'isolement est déplaçable sélectivement dans une position aval d'ouverture du circuit par actionnement mécanique réalisé par le clapet (10, 100) pare-poussière.

6. Robinet pour fluide sous pression, en particulier pour gaz sous pression, avec ou sans détendeur de pression, comprenant un raccord de remplissage destiné à coopérer avec une prise de conditionnement pour permettre le remplissage dudit récipient via ledit raccord, **caractérisé en ce que** le raccord (1) de remplissage est conforme à l'une quelconque des revendications 1 à 5.

7. Récipient de fluide sous pression, en particulier bouteille de gaz sous pression, comprenant un robinet (12) conforme à la revendication 6.

8. Procédé de remplissage d'un récipient de gaz sous pression conforme à la revendication 7 au moyen d'une prise (11) de conditionnement connectée mécaniquement et de façon amovible audit raccord (1) de remplissage du récipient (13), **caractérisé en ce qu'**il comporte une première étape dé déplacement du clapet (10, 100) pare-poussière vers l'aval pour ouvrir l'extrémité amont du circuit (6) via un actionnement mécanique et/ou via un actionnement fluidique réalisé par la prise (11) de conditionnement et une seconde étape de déplacement du clapet (7) d'isolement vers une position aval d'ouverture via un actionnement mécanique réalisé par le clapet (10, 100) pare-poussière et/ou via un actionnement fluidique réalisé par le gaz délivré par la prise de conditionnement, lors du remplissage au moins une partie du gaz transitant d'amont (3) en aval (4) est guidé dans le ou les passages (103, 203) du clapet (10) pare-poussière, à travers le corps dudit clapet (10, 100) pare-poussière.

9. Procédé selon la revendication 8, **caractérisé en ce que**, lors de la première étape, le clapet (10, 100) pare-poussière est déplacé dans sa première position aval déterminée dite « sans contact » et **en ce que**, dans la seconde étape, le clapet (7) d'isolement est déplacé vers une position aval d'ouverture via un actionnement fluidique réalisé par le gaz délivré par la prise de conditionnement.

10. Procédé selon la revendication 8, **caractérisé en ce que**, lors de la première étape, le clapet (10, 100) pare-poussière est déplacé dans sa seconde position aval déterminée dite « de contact » et **en ce que** dans la seconde étape le clapet (7) d'isolement est déplacé vers une position aval d'ouverture via un actionnement mécanique réalisé par le clapet (10, 100) pare-poussière.

11. Procédé selon l'une quelconque des revendications 8 à 10, **caractérisé en ce que** le clapet (10, 100) pare-poussière est déplacé vers l'aval par une action mécanique d'une extrémité d'un pousse-clapet (111) appartenant à la prise (11) de conditionnement.

12. Procédé selon l'une quelconque des revendications 8 à 11, **caractérisé en ce que** la seconde (100) pièce concentrique est déplacée dans une position plus en aval que la première (10) pièce concentrique pour actionner mécaniquement le clapet (7) d'isolement vers une position aval d'ouverture.

13. Procédé selon l'une quelconque des revendications 8 à 12, **caractérisé en ce que** la prise de conditionnement (11) comprend un pousse-clapet (111) destiné à être introduit de façon étanche dans l'orifice de l'extrémité amont (3) du corps (2) du raccord pour repousser le clapet (10, 100) pare-poussière vers l'aval, le pousse-clapet (111) comprenant un manchon extérieur (211) et une poussoir (311) central monté coulissant dans le manchon extérieur (211) pour actionner sélectivement vers l'aval la seconde pièce concentrique (100) par rapport à la première pièce concentrique (10).

14. Prise (11) de conditionnement destinée à assurer le remplissage d'un récipient conforme à la revendication 7, la prise comprenant des organes d'accrochage mécanique sélectif de la prise sur une surface extérieure d'un raccord, un pousse-clapet (111) mobile en translation destiné à être introduit dans l'orifice d'un raccord (1) pour repousser un clapet (10, 100) pare-poussière, le pousse-clapet (111) comprenant un manchon extérieure (211) et un poussoir (311) central monté coulissant dans le manchon extérieur (211) pour actionner sélectivement vers l'aval la seconde pièce concentrique (100) par rapport à la première pièce concentrique (10), caractérisé eh ce que le manchon extérieur (211) comprend un organe d'étanchéité (212) constitué d'un joint torique pour assurer une étanchéité statique pendant que le poussoir (311) central est sélectivement déplacé, l'ensemble manchon extérieur et poussoir central est sélectivement mobile en translation relativement aux organes d'accrochage de la prise de conditionnement prévus pour l'accrochage de la prise sur un raccord.

## Patentansprüche

1. Füllstutzen für Druckfluidbehälter, der für das Zusammenwirken mit einem Konditionierungsanschluss zum Befüllen des Behälters bestimmt ist, wobei der Stutzen (1) einen Körper (2) umfasst, der einen inneren Füllkreislauf (6) zwischen einem stromaufwärtigen Ende (3), das für die Verbindung mit einem Konditionierungsanschluss bestimmt ist, und einem stromabwärtigen Ende (4), das für die Verbindung mit einem Behälter bestimmt ist, definiert, wobei der Stutzen ein Sperrventil (7) umfasst, das relativ zu einem Sitz (8) beweglich ist zwischen einer stromaufwärtigen Stellung zum Schließen des Kreislaufs und einer stromabwärtigen Stellung zum Öffnen des Kreislaufs, wobei das Sperrventil (7) in Richtung seiner stromaufwärtigen Stellung durch ein Rückstellorgan (9) beaufschlagt wird, wobei der Stutzen (1) ferner eine Staubschutzklappe (10, 100) umfasst, die stromaufwärts des Sperrventils (7) angeordnet ist, wobei die Staubschutzklappe (10, 100) ein stromabwärtiges Ende (101) aufweist und relativ zu dem Körper (2) beweglich ist zwischen einer stromaufwärtigen Stellung zum Schließen des stromaufwärtigen Endes (3) des Kreislaufs (6) und einer stromabwärtigen Stellung zum Öffnen des stromaufwärtigen Endes (3) des Kreislaufs, wobei die Staubschutzklappe (10, 100) in Richtung ihrer stromaufwärtigen Stellung durch wenigstens ein Rückstellorgan (14, 140) beaufschlagt wird, **dadurch gekennzeichnet, dass** die Staubschutzklappe (10, 100) selektiv in Richtung stromabwärts bewegbar ist, und zwar entweder in:
- eine erste stromabwärtige, so genannte "kontaktlose" Stellung, die das stromaufwärtige Ende (3) des Kreislaufs (6) öffnet, in der das stromabwärtige Ende (101) der Staubschutzklappe (10, 100) das stromaufwärtige Ende (107) des Sperrventils (7) nicht verschiebt, wobei das stromaufwärtige Ende (107) des Sperrventils (7) in seine stromabwärtige Stellung zum Öffnen des Kreislaufs (6) durch unter Druck stehendes Fluid, das durch das geöffnete stromaufwärtige Ende (3) des Kreislaufs (6) eintritt, verschoben werden kann, oder in
- eine zweite stromabwärtige, so genannte "kontaktbehaftete" Stellung, die das stromaufwärtige Ende (3) des Kreislaufs (6) öffnet, in der das stromabwärtige Ende (101) der Staubschutzklappe (10, 100) ein stromaufwärtiges Ende (107) des beweglichen Sperrventils (7) verschiebt, um durch Kontakt das Sperrventil (7) in seine stromabwärtige Stellung zum Öffnen des Kreislaufs (6) zu verschieben, und dass die Staubschutzklappe (10, 100) einen oder mehrere Durchlässe (103) aufweist, um mindestens einen Teil des Fluidflusses, der von stromaufwärts (3) nach stromabwärts (4) fließt, durch die Staubschutzklappe (10) hindurch zu führen,
und dass die Staubschutzklappe (10, 100) ein erstes (10) und ein zweites (100) konzentrisches Teil umfasst, die relativ zueinander in der stromaufwärtigen/stromabwärtigen Richtung bewegbar sind.

2. Stutzen nach Anspruch 1, **dadurch gekennzeichnet, dass** er ein erstes Rückstellorgan (14) aufweist, welches das erste konzentrische Teil (10) nach stromaufwärts beaufschlagt, um das stromaufwärtige Ende (3) des Kreislaufs zu verschließen, wobei das erste Rückstellorgan (14) ein erstes Ende, das auf einem feststehenden Teil des Stutzens zur Abstützung kommt, und ein zweites Ende, das auf dem ersten konzentrischen Teil (10) zur Abstützung kommt, aufweist, wobei der Stutzen ein zweites Rückstellorgan (140) aufweist, welches das zweite konzentrische Teil (100) nach stromaufwärts beaufschlagt, um das stromaufwärtige Ende (3) des Kreislaufs zu verschließen, wobei das zweite Rückstellorgan (140) ein erstes Ende aufweist, das auf dem ersten konzentrischen Teil (10) zur Abstützung kommt, und ein zweites Ende aufweist, das auf dem zweiten konzentrischen Teil (100) zur Abstützung kommt.

3. Stutzen nach einem der Ansprüche 1 oder 2, **dadurch gekennzeichnet, dass** das erste konzentrische Teil (10) einen oder mehrere Durchlässe (103) aufweist, um mindestens einen Teil des Fluidflusses, der von stromaufwärts (3) nach stromabwärts (4) fließt, durch die Staubschutzklappe (10, 100) hindurch zu führen.

4. Stutzen nach einem der Ansprüche 1 bis 3, **dadurch gekennzeichnet, dass** das zweite konzentrische Teil (100) in einem mittleren internen Durchlass (203) des ersten konzentrischen Teils (10) verschiebbar gelagert ist.

5. Stutzen nach einem der Ansprüche 1 bis 4, **dadurch gekennzeichnet, dass** das Sperrventil (7) selektiv in eine stromabwärtige Stellung zum Öffnen des Kreislaufs bewegbar ist durch mechanische Betätigung, die durch die Staubschutzklappe (10, 100) realisiert wird.

6. Hahn für Druckfluid, insbesondere für Druckgas, mit oder ohne Druckminderventil, umfassend einen Füllstutzen, der für das Zusammenwirken mit einem Konditionierungsanschluss zum Befüllen des Behälters über den Stutzen bestimmt ist, **dadurch gekennzeichnet, dass** der Füllstutzen (1) einem der Ansprüche 1 bis 5 entspricht.

7. Druckfluidbehälter, insbesondere Druckgasflasche, umfassend einen Hahn (12) nach Anspruch 6.

8. Verfahren zum Füllen eines Druckgasbehälters nach Anspruch 7 mittels eines Konditionierungsanschlusses (11), der mit dem Stutzen (1) zum Befüllen des Behälters (13) mechanisch und lösbar verbunden ist, **dadurch gekennzeichnet, dass** es einen ersten Schritt des Bewegens der Staubschutzklappe (10, 100) in Richtung stromabwärts zum Öffnen des stromaufwärtigen Endes des Kreislaufs (6) über eine mechanische Betätigung und/oder über eine fluidische Betätigung, die durch den Konditionierungsanschluss (11) realisiert wird, aufweist und einen zweiten Schritt des Bewegens des Sperrventils (7) in Richtung einer stromabwärtigen Öffnungsstellung über eine mechanische Betätigung, die durch die Staubschutzklappe (10, 100) realisiert wird, und/oder über eine fluidische Betätigung, die durch das durch den Konditionierungsanschluss bereitgestellte Gas realisiert wird, aufweist, wobei beim Befüllen mindestens ein Teil des Gases, das von stromaufwärts (3) nach stromabwärts (4) fließt, durch den Körper der Staubschutzklappe (10, 100) hindurch in den oder die Durchlässe (103, 203) der Staubschutzklappe (10) geführt wird.

9. Verfahren nach Anspruch 8, **dadurch gekennzeichnet, dass** beim ersten Schritt die Staubschutzklappe (10, 100) in ihre erste stromabwärtige, so genannte "kontaktlose" Stellung bewegt wird und dass beim zweiten Schritt das Sperrventil (7) in Richtung einer stromabwärtigen Öffnungsstellung bewegt wird, und zwar über eine fluidische Betätigung, die durch das Gas realisiert wird, das vom Konditionierungsanschluss bereitgestellt wird.

10. Verfahren nach Anspruch 8, **dadurch gekennzeichnet, dass** beim ersten Schritt die Staubschutzklappe (10, 100) in ihre zweite stromabwärtige, so genannte "kontaktbehaftete" Stellung bewegt wird und dass im zweiten Schritt das Sperrventil (7) in eine stromabwärtige Öffnungsstellung bewegt wird, und zwar über eine mechanische Betätigung, die durch die Staubschutzklappe (10, 100) realisiert wird.

11. Verfahren nach einem der Ansprüche 8 bis 10, **dadurch gekennzeichnet, dass** die Staubschutzklappe (10,100) durch eine mechanische Einwirkung eines Endes eines Klappenantriebs (111), der dem Konditionierungsanschluss (11) zugehörig ist, nach stromabwärts bewegt wird

12. Verfahren nach einem der Ansprüche 8 bis 11, **dadurch gekennzeichnet, dass** das zweite konzentrische Teil (100) in eine stromabwärtigere Stellung bewegt wird als das erste konzentrische Teil (10), um das Sperrventil (7) mechanisch in eine stromabwärtige Öffnungsstellung zu betätigen.

13. Verfahren nach einem der Ansprüche 8 bis 12, **dadurch gekennzeichnet, dass** der Konditionierungsanschluss (11) einen Klappenantrieb (111) aufweist, der dazu bestimmt ist, abdichtend in die Öffnung des stromaufwärtigen Endes (3) des Körpers (2) des Stutzens eingeführt zu werden, um die Staubschutzklappe (10, 100) nach stromabwärts zu bewegen, wobei der Klappenantrieb (111) eine äußere Hülse (211) und ein mittleres Schubelement (311) umfasst, das in der äußeren Hülse (211) verschiebbar gelagert ist, um selektiv das zweite konzentrische Teil (100) gegenüber dem ersten konzentrischen Teil (10) nach stromabwärts zu betätigen.

14. Konditionierungsanschluss (11), der dazu bestimmt ist, das Befüllen eines Behälters nach Anspruch 7 sicherzustellen, wobei der Anschluss Organe zum selektiven mechanischen Einhängen des Anschlusses an einer äußeren Fläche eines Stutzens aufweist, einen in Translation beweglichen Klappenantrieb (111), der dazu bestimmt ist, in die Öffnung eines Stutzens (1) eingeführt zu werden, um eine Staubschutzklappe (10, 100) zurückzuschieben, wobei der Klappenantrieb (111) eine äußere Hülse (211) und ein mittleres Schubelement (311) aufweist, das in der äußeren Hülse (211) verschiebbar gelagert ist, um selektiv das zweite konzentrische Teil (100) gegenüber dem ersten konzentrischen Teil (10) nach stromabwärts zu betätigen, **dadurch gekennzeichnet, dass** die äußere Hülse (211) ein Abdichtorgan (212) aufweist, das von einem O-Ring gebildet ist, um eine statische Abdichtung sicherzustellen, während das mittlere Schubelement (311) selektiv bewegt wird, wobei die Einheit aus äußerer Hülse und mittlerem Schubelement selektiv in Translation beweglich ist relativ zu den Organen zum Einhängen des Konditionierungsanschlusses, die zum Einhängen des Anschlusses an einem Stutzen vorgesehen sind.

## Claims

1. Filling connector for a pressurised fluid container intended to cooperate with a filling outlet in order to allow said container to be filled, the connector (1) comprising a body (2) defining an internal filling circuit (6) between an upstream end (3) intended to be connected to a filling outlet and a downstream end (4) intended to be connected to a container, the connector comprising an isolation valve (7) that can move relative to a seat (8) between an upstream position, in which the circuit is closed, and a downstream position, in which the circuit is open, said isolation valve (7) being urged into its upstream position by a return member (9), the connector (1) further comprising a dustscreen valve (10, 100) arranged upstream of the isolation valve (7), said dustscreen valve (10, 100) comprising a downstream end (101) and being able to move, relative to the body (2), between an upstream position, in which the upstream end (3) of the circuit (6) is closed, and a downstream position, in which the upstream end (3) of the circuit is open, said dustscreen valve (10, 100) being urged into its upstream position by at least one return member (14, 140), **characterised in that** the dustscreen valve (10, 100) can be selectively moved downstream either:
- in a first set downstream position, called "contactless" position, which opens the upstream end (3) of the circuit (6), in which the downstream end (101) of the dustscreen valve (10, 100) does not push the upstream end (107) of the isolation valve (7), the upstream end (107) of the isolation valve (7) being able to be pushed into its downstream position, in which the circuit (6) is open, by pressurised fluid entering through the open upstream end (3) of the circuit (6), or:
- in a second set downstream position, called "contact" position, which opens the upstream end (3) of the circuit (6), in which the downstream end (101) of the dustscreen valve (10, 100) pushes an upstream end (107) of the movable isolation valve (7) in order to move the isolation valve (7), by means of contact, into its downstream position, in which the circuit (6) is open, and **in that** the dustscreen valve (10, 100) comprises one or more passage(s) (103) for guiding at least part of the flow of fluid moving from upstream (3) to downstream (4) through the body of said dustscreen valve (10),
and **in that** the dustscreen valve (10, 100) comprises a first (10) and a second (100) concentric parts able to be moved in relation to one another in the upstream-downstream direction.

2. Connector according to claim 1, **characterised in that** it comprises a first return member (14) urging the first concentric part (10) upstream so as to close off the upstream end (3) of the circuit, the first return member (14) comprising a first end in abutment on a fixed part of the connector and a second end in abutment on said first concentric part (10), the connector comprising a second return member (140) urging the second concentric part (100) upstream so as to close off the upstream end (3) of the circuit, the second return member (140) comprising a first end in abutment on the first concentric part (10) and a second end in abutment on said second concentric part (100).

3. Connector according to either claim 1 or claim 2, **characterised in that** the first concentric part (10) comprises one or more passage(s) (103) for guiding at least part of the flow of fluid moving from upstream (3) to downstream (4) through the body of said dustscreen valve (10, 100).

4. Connector according to any of claims 1 to 3, **characterised in that** the second concentric part (100) is mounted so as to slide in a central internal passage (203) of the first concentric part (10).

5. Connector according to any of claims 1 to 4, **characterised in that** the isolation valve (7) can be selectively moved into a downstream position, in which the circuit is open, via mechanical actuation carried out by the dustscreen valve (10, 100).

6. Tap for pressurised fluid, particularly for pressurised gas, with or without a pressure relief valve, comprising a filling connector intended to cooperate with a filling outlet in order to allow said container to be filled via said connector, **characterised in that** the filling connector (1) is a filling connector according to any of claims 1 to 5.

7. Pressurised fluid container, in particular a pressurised gas cylinder, comprising a tap (12) according to claim 6.

8. Method for filling a pressurised gas container according to claim 7 using a filling outlet (11) that is mechanically and detachably connected to said filling connector (1) of the container (13), **characterised in that** it comprises a first step of moving the dustscreen valve (10, 100) downstream in order to open the upstream end of the circuit (6) via a mechanical actuation and/or via a fluidic actuation carried out by the filling outlet (11), and a second step of moving the isolation valve (7) into a downstream opening position via a mechanical actuation carried out by the dustscreen valve (10, 100) and/or via a fluidic actuation carried out by the gas delivered by the filling outlet, and, during filling, at least part of the gas moving from upstream (3) to downstream (4) is guided in the one or more passage(s) (103, 203) of the dustscreen valve (10) through the body of said dustscreen valve (10, 100).

9. Method according to claim 8, **characterised in that**, during the first step, the dustscreen valve (10, 100) is moved into its first set downstream position, called "contactless" position, and **in that**, during the second step, the isolation valve (7) is moved into a downstream opening position via a fluidic actuation carried out by the gas delivered by the filling outlet.

10. Method according to claim 8, **characterised in that**, during the first step, the dustscreen valve (10, 100) is moved into its second set downstream position, called "contact" position, and **in that**, during the second step, the isolation valve (7) is moved into a downstream opening position via a mechanical actuation carried out by the dustscreen valve (10, 100).

11. Method according to any of claims 8 to 10, **characterised in that** the dustscreen valve (10, 100) is moved downstream by a mechanical action of an end of a push-valve (111) belonging to the filling outlet (11).

12. Method according to any of claims 8 to 11, **characterised in that** the second concentric part (100) is moved into a position further downstream than the first concentric part (10) in order to mechanically actuate the isolation valve (7) into a downstream opening position.

13. Method according to any of claims 8 to 12, **characterised in that** the filling outlet (11) comprises a push-valve (111) intended to be introduced in a sealed manner into the orifice of the upstream end (3) of the body (2) of the connector in order to push the dustscreen valve (10, 100) back downstream, the push-valve (111) comprising an outer sleeve (211) and a central plunger (311) mounted so as to slide in the outer sleeve (211) in order to selectively actuate the second concentric part (100) downstream relative to the first concentric part (10).

14. Filling outlet (11) intended to allow the filling of a container according to claim 7, the outlet comprising members for selectively mechanically fastening the outlet on an external surface of a connector, a translationally movable push-valve (111) intended to be introduced into the orifice of a connector (1) in order to push a dustscreen valve (10, 100) back, the push-valve (111) comprising an outer sleeve (211) and a central plunger (311) mounted so as to slide in the outer sleeve (211) in order to selectively actuate the second concentric part (100) downstream relative to the first concentric part (10), **characterised in that** the outer sleeve (211) comprises a sealing member (212) made up of an O-ring in order to provide a static seal while the central plunger (311) is selectively moved, and the outer sleeve and central plunger unit is selectively translationally movable relative to the fastening members of the filling outlet provided to fasten the outlet to a connector.
